# FASCICULE DE BREVET EUROPEEN

(11) **EP 3 428 057 B1**
(45) Date de publication et mention de la délivrance du brevet: **29.01.2020**
(21) Numéro de dépôt: 18183194.2
(22) Date de dépôt: 12.07.2018
(51) Int. Cl.: B64C 1/14, E05B 85/04

(54) **GÂCHE DE SERRURE ET AÉRONEF COMPORTANT UNE TELLE GÂCHE**
SCHLOSSPLATTE UND LUFTFAHRZEUG, DAS EINE SOLCHE SCHLOSSPLATTE UMFASST
LOCK LATCH AND AIRCRAFT COMPRISING SUCH A LATCH

(30) Priorité: 13.07.2017 FR 1756671
(43) Date de publication de la demande: 16.01.2019
(73) Titulaire: LISI AEROSPACE, 75012 Paris (FR)
(72) Inventeur: BELLAVIA, Bastien, 18120 MEREAU (FR); HUMMEL, Boris, 18120 QUINCY (FR)
(74) Mandataire: Ipside

(56) Documents cités:
- EP-A2- 1 111 168
- DE-A1- 3 740 757
- DE-U1- 9 421 878
- JP-A- 405 086 752

## Description

### DOMAINE

La présente invention se rapporte à une gâche comprenant un système mécanique détectant la fermeture ou l'ouverture du système de verrouillage, et coopérant notamment avec un verrou d'une porte d'un aéronef tel qu'un avion ou un hélicoptère, comme elle est définie dans le préambule de la revendication 1.

### ETAT DE L'ART

De manière générale et dans la plupart des aéronefs, l'ouverture d'une porte est permise grâce à des charnières sur un montant de la porte, et la porte est maintenue fermée grâce à un ou plusieurs verrous verrouillant la porte sur une structure du fuselage de l'aéronef. Il est bien évidemment essentiel que lors du vol, l'intégralité des verrous soit effectivement fermée et ceci d'autant plus lorsque la cabine de l'aéronef est pressurisée en vol, la force exercée alors sur la porte résultant de cette pression, pouvant dépasser 500 millibars, étant susceptible de provoquer son ouverture en cas de défaillance du système de verrouillage. Il convient donc de pouvoir s'assurer de manière efficace, sûre et rapide, du bon verrouillage de tous les verrous de l'aéronef avant le décollage.

Aujourd'hui, dans la plupart des cas, cette vérification repose quasi-entièrement sur la vigilance de l'opérateur qui effectue l'opération de verrouillage. Lors de cette opération, il n'est pas aisé de s'apercevoir qu'un ou plusieurs verrous sont mal fermés, car le verrouillage d'un seul verrou met en place la porte à l'intérieur de son cadre, et la porte semble alors correctement fermée.

Certaines erreurs ont causé parfois une ouverture intempestive d'une porte en vol. Un indicateur clair du verrouillage des portes est donc une source d'amélioration significative de la sécurité des vols. Ainsi, pour fournir un système de détection efficace, il doit être possible d'indiquer le statut verrouillé ou déverrouillé de chaque verrou de manière fiable et parfaitement visible.

Une des difficultés d'un système mécanique de détection de fermeture est de s'assurer que l'indicateur de déverrouillage affiche bien un statut de déverrouillage du verrou et n'indique pas la position de la poignée du verrou, alors que la fonction mécanique recherchée est la mise sous contrainte des verrous. Il existe donc un besoin pour un système de détection de verrouillage répondant aux exigences ci-dessus mentionnées.

Le document DE 94 21 878 U1 divulgue une gâche comportant un élément mobile en rotation autour d'un axe fixé à une platine. L'élément comporte des pales pour entraîner l'élément en rotation sous l'action d'un pêne et comporte une forme de came orientée à l'opposé du fil de gâche pour agir sur un interrupteur.

### RESUME DE L'INVENTION

Pour ce faire, la présente invention vise une gâche pour coopérer avec un pêne d'une serrure, la gâche comprenant une ferrure destiné à être fixée à une structure, et un fil de gâche solidaire de la ferrure, le fil de gâche s'étendant depuis une première surface de la ferrure.

Dans la gâche :
- un axe est monté solidaire de la ferrure et libre en rotation par rapport à ladite ferrure de sorte à s'étendre dans une direction longitudinale X;
- une pale est montée fixe en rotation sur l'axe d'un premier côté de la ferrure à proximité du fil de gâche ;
- un indicateur de position angulaire est monté fixe en rotation sur l'axe ;
la pale étant disposée de manière à pouvoir être entraînée en rotation par le pêne lorsque celui-ci accroche ou se décroche du fil de gâche, et l'indicateur de position angulaire étant apte à indiquer la position angulaire de la pale.

La gâche comprend un moyen pour ramener la pale dans une position stable déverrouillée et l'indicateur dans une position ouverte lorsque le pêne est désengagé du fil de gâche et en l'absence d'effort sur la pale. Ledit moyen comporte un ressort de compression et une came disposés entre la ferrure et l'indicateur, la came étant fixe en rotation et libre en translation dans la direction longitudinale, la came étant agencée pour rappeler et maintenir l'axe dans la position ouverte dudit indicateur en l'absence d'effort sur la pale.

Ainsi, grâce à un tel dispositif, il est possible de vérifier par la lecture de l'indicateur de position angulaire si le crochet a effectivement accroché le fil de gâche de la gâche, et donc si le verrou est effectivement verrouillé, de manière simple et fiable. Dans le cas contraire, lorsque le crochet n'a pas accroché le fil de gâche, il ne pousse pas la pale ce que la lecture de l'indicateur permet également de détecter. Dans un aéronef, l'information de verrouillage-non verrouillage donnée par un capteur détectant la position de l'indicateur de position angulaire peut ainsi être indiquée en cabine ou à un membre de l'équipage.

Avantageusement, la gâche de l'invention comporte tout ou partie des caractéristiques suivantes, pour autant qu'elles soient techniquement opérables :
- la came comprend un profil de came en forme de V en creux, la gâche comprenant de plus un doigt fixe en rotation par rapport à l'axe, le doigt étant apte à glisser sur le profil de came en V, sous l'effet d'une rotation de la pale et sous l'effet élastique du ressort maintenant la came au contact du doigt ;
- l'indicateur de position angulaire comprend un moyeu monté fixe en rotation sur l'axe, étant ainsi entraîné en rotation en fonction des mouvements angulaires de la pale avec laquelle il est synchronisé ;
- l'indicateur de position angulaire comporte au moins un bras s'étendant radialement vers l'extérieur du moyeu. Il est ainsi amplifié le déplacement de l'extrémité du bras qui correspond au déplacement angulaire de la pale ;
- le doigt apte à glisser sur le profil de came est solidaire du moyeu de l'indicateur de position ;
- l'axe comprend un méplat pourvus à chaque extrémité, la pale et le moyeu comprenant chacun un plat pourvu sur une surface intérieure d'une ouverture de la pale et d'une ouverture du moyeu, les plats étant aptes à coopérer avec les méplats de l'axe pour bloquer la rotation de la pale et du moyeu sur l'axe lorsque l'axe est engagé dans les ouvertures. Il est ainsi obtenu un ensemble tournant comportant l'axe, la pale et l'indicateur de position angulaire qui peut être réalisé et assemblé simplement sans jeu excessif;
- la came et le ressort sont libres de coulisser sur une entretoise, l'entretoise étant fixe par rapport à la ferrure et recevant une portion de l'axe dans un trou axial de l'entretoise ;
- l'entretoise comprend un méplat sur une surface extérieure, et la came comprend un plat sur une surface intérieure, le plat de la came étant apte à coopérer avec le méplat de l'entretoise pour bloquer la rotation de la came sur l'entretoise. Cet agencement simple permet de maintenir la came mobile en translation sur l'entretoise et de conserver son orientation angulaire par rapport à la ferrure pour obtenir une position de l'indicateur de position angulaire, et donc de la pale, stable et précise dans la position ouverte ;
- la gâche comporte un carter dont une ouverture est disposée en vis-à-vis de l'indicateur de position pour permettre à un capteur de détecter une indication de position ;
- l'axe, la pale et l'indicateur de position angulaire sont agencés sur un côté de la ferrure du côté de la première surface de ladite ferrure de laquelle première surface s'étend le fil de gâche. Cet agencement permet de réaliser une gâche compacte et pouvant être fixée en applique sur la structure de support sans être intrusive vis-à-vis de cette structure ;
- l'axe traverse la ferrure de sorte à s'étendre de part et d'autre de ladite ferrure ; et, la pale est montée fixe en rotation à une première extrémité de l'axe ; et, l'indicateur de position angulaire est monté fixe en rotation à une deuxième extrémité de l'axe, opposée à la première extrémité. Cet agencement sépare, par la barrière physique de la ferrure, la fonction de détection et la fonction d'indication de l'état du verrou ce qui permet en particulier de mettre des détecteurs de la position angulaire à l'intérieur d'une structure sur laquelle est fixée la gâche ;
- le ressort de compression et la came sont disposés entre une deuxième surface de la ferrure, opposée à la première surface, et l'indicateur de position angulaire ;
- le moyeu est monté fixe en rotation à proximité de la deuxième extrémité sur l'axe ;
- le carter comprend une première ouverture sur un bras disposé en vis-à-vis de la deuxième surface de la ferrure pour recevoir la deuxième extrémité de l'axe ;
- le carter comprend une deuxième ouverture sur un bras disposé en vis-à-vis de l'indicateur de position pour permettre à un capteur de détecter une indication de position.

L'invention concerne également un aéronef comprenant au moins un battant mobile équipé d'au moins une serrure comprenant un pêne mobile en rotation. Au moins une structure de l'aéronef est équipée d'une gâche conforme à l'invention dont le fil de gâche coopère avec le pêne de l'au moins une serrure pour maintenir le battant mobile en position verrouillée sur la structure.

Le battant mobile est par exemple une porte, ou une trappe, ou un capot moteur, pour lesquels il est particulièrement important que l'équipage de l'aéronef dispose d'une information fiable du verrouillage correct.

Plus particulièrement, l'aéronef est un hélicoptère ou un avion.

### PRESENTATION DES FIGURES

La présente invention sera mieux comprise à la lumière de la description détaillée qui suit, description faite en liaison avec les dessins dans lesquels:
- la figure 1 est une vue d'une serrure de l'art antérieur dont une flasque latérale n'est pas représentée pour visualiser les éléments mécaniques interne du verrou dont des parties cachées sont représentées par transparence,
- la figure 2 est une représentation isométrique éclatée de la gâche selon un mode de réalisation de l'invention,
- la figure 3 est une vue isométrique de la gâche de la figure 2, assemblée, dans une position non verrouillée,
- la figure 4 est une vue isométrique de la gâche de la figure 2, assemblée, dans une première position verrouillée,
- la figure 5 est une vue isométrique de la gâche de la figure 2, assemblée, dans une deuxième position verrouillée,
- la figure 6 est une vue en coupe de la gâche de la figure 3.

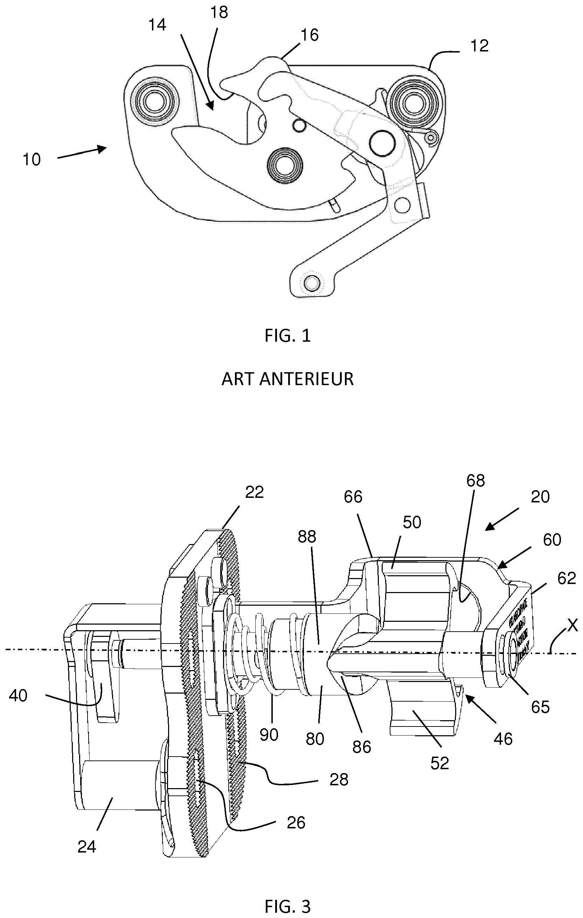

Pour faciliter la lecture des dessins, seuls les éléments nécessaires à la compréhension de l'invention ont été représentés. Les figures 3 à 6 représentent une même forme de réalisation de l'invention, et les mêmes éléments portent les mêmes références d'un dessin à l'autre.

### DESCRIPTION DETAILLEE

La figure 1 montre une serrure 10 de l'art antérieur décrite dans la demande de brevet WO2014/096618A1. La serrure 10 est destinée à être fixée sur une porte battante ou coulissante d'un hélicoptère. Dans ce cas particulier, la serrure 10 est donc mobile par rapport à une structure de l'hélicoptère.

La serrure 10 comprend un corps 12 comportant une échancrure 14 formant une ouverture en forme de cône. La serrure comporte également un pêne 16 mobile en rotation à l'intérieur du corps, le pêne 16 comportant un profil en forme de crochet 18. L'ouverture 14 est apte à accueillir une gâche comprenant un fil de gâche, disposé selon un axe sensiblement perpendiculaire au corps 12. La forme de crochet 18 est apte à s'enrouler autour du fil de gâche.

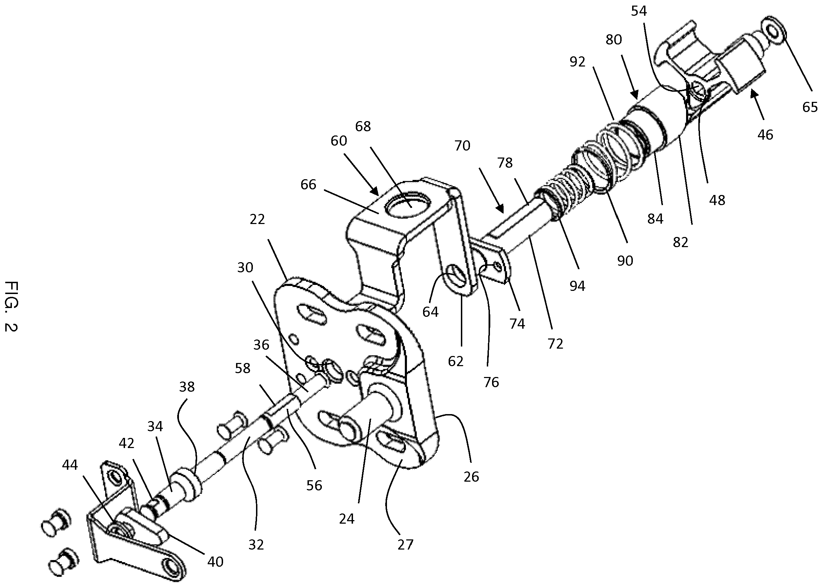

Les figures 2 à 6 montrent une gâche 20 selon un mode de réalisation de l'invention.

La gâche 20 est par exemple fixée à une partie structurale (non représentée) d'un hélicoptère au moyen d'une ferrure 22, par exemple au moyen de rivets ou de boulons s'étendant au travers d'ouvertures 26 pourvues sur la ferrure. La ferrure 22 comprend un fil de gâche 24 s'étendant depuis une première surface 27 de la ferrure, dans une direction longitudinale X, sensiblement perpendiculaire à ladite première surface de la ferrure. La ferrure comprend une deuxième surface 28 opposée à la première surface 27 et sensiblement parallèle à la première surface.

Comme cela est visible en figure 2, la ferrure comprend une ouverture circulaire 30 pour recevoir un axe 32 s'étendant dans la direction X, l'axe 32 est parallèle à l'axe dans lequel s'étend le fil de gâche 24. L'axe comprend une première extrémité 34 et une deuxième extrémité 36, ainsi qu'une collerette 38 s'étendant radialement vers l'extérieur et située entre les deux extrémités. Un diamètre extérieur de la collerette 38 est supérieur au diamètre de l'ouverture 30 afin de bloquer, dans un sens, la translation de l'axe 32 dans la ferrure. Le diamètre extérieur de l'axe 32 est inférieur au diamètre de l'ouverture 30 afin de permettre la rotation de l'axe dans l'ouverture 30.

Une pale 40 est disposée sur la première extrémité 34 de l'axe 32. La première extrémité 34 comporte un méplat 42, et la pale comprend une ouverture avec sur une surface intérieure de ladite ouverture un plat coopérant avec le méplat 42 afin d'immobiliser la pale en rotation sur l'axe 32. Une rondelle 44 est sertie sur l'extrémité 34 afin de bloquer la translation de la pale 40 sur l'axe. En variante, la pale peut être fixée sur l'axe par tout autre moyen, ou peut constituer une portion de l'axe 32, en étant fabriquée par exemple par un procédé de fabrication additive. Dans ce cas, l'axe n'a pas besoin de méplat et aucune rondelle de sertissage n'est nécessaire.

La disposition de l'ouverture 30, la longueur de la portion de l'axe 32 s'étendant du même côté que le fil de gâche et les dimensions de la pale 40 sont choisies de sorte que la pale une fois fixée sur l'axe 32 s'étend en direction du fil de gâche et puisse être entraîné en rotation par une branche supérieure du crochet 18 de la serrure lorsque ledit fil de gâche est engagé dans la serrure.

Dans l'exemple illustré aux figures 2 à 5, la pale 40 a une forme, dans un plan parallèle à la direction longitudinale X, sensiblement triangulaire dont une pointe peut être entraînée en rotation, avec l'axe 32 auquel ladite pale est fixée, par un pêne venant s'accrocher sur le fil de gâche, dans un sens de rotation ou dans l'autre. Lorsque la serrure est ouverte, le pêne n'est pas engagé sur le fil de gâche et la pointe est disposée sensiblement dans un plan comprenant l'axe 32 et le fil de gâche 24. Cette position est dite « déverrouillée » dans le reste de la description. Au contraire, quand la serrure est verrouillée et que le pêne engage le fil de gâche, la pointe, repoussée par le pêne, est disposée dans un plan présentant un angle avec le plan contenant l'axe 32 et le fil de gâche 24. Cette position est dite « verrouillée » dans le reste de la description.

Evidemment, la forme de la pale n'est pas limitée à la forme illustrée, toute autre forme permettant l'entraînement de la pale et en conséquence de l'axe 32 en rotation convient.

La gâche comprend également un indicateur de position 46 disposé à proximité de la deuxième extrémité 36 de l'axe. Dans l'exemple illustré, l'indicateur de position 46 est réalisé sous la forme d'un moyeu 48 pourvu de deux bras 50, 52 s'étendant radialement vers l'extérieur depuis le moyeu. Le moyeu 48 comprend une ouverture 54 adaptée pour recevoir une portion 56 de l'axe 32. Cette portion 56 comporte un méplat 58 coopérant avec un plat pourvu sur une paroi intérieure de l'ouverture 54, afin de bloquer la rotation du moyeu sur l'arbre. Comme indiqué dans le cas de la pale, le moyeu peut être fixé sur l'axe par tout autre moyen, ou peut constituer une portion de l'axe 32 en étant fabriqué par un procédé de fabrication additive. Il sera évidemment choisi des solutions qui, combinées, permette de réaliser l'assemblage de la gâche.

La gâche comprend également un carter 60 fixé à la deuxième surface 28 de la ferrure 22. Le carter comprend un bras 62 s'étendant parallèlement à la ferrure et pourvu d'une première ouverture 64 recevant la deuxième extrémité 36 de l'axe 32. Une rondelle 65 est sertie sur la deuxième extrémité de l'axe afin de bloquer la translation de l'axe 32. La carter comprend une paroi 66 reliant la ferrure 22 au bras 62, munie d'une deuxième ouverture 68 destinée à recevoir un capteur de position (non représenté). La disposition de l'ouverture 68 est choisie de sorte à être en vis-à-vis de l'indicateur de position 46.

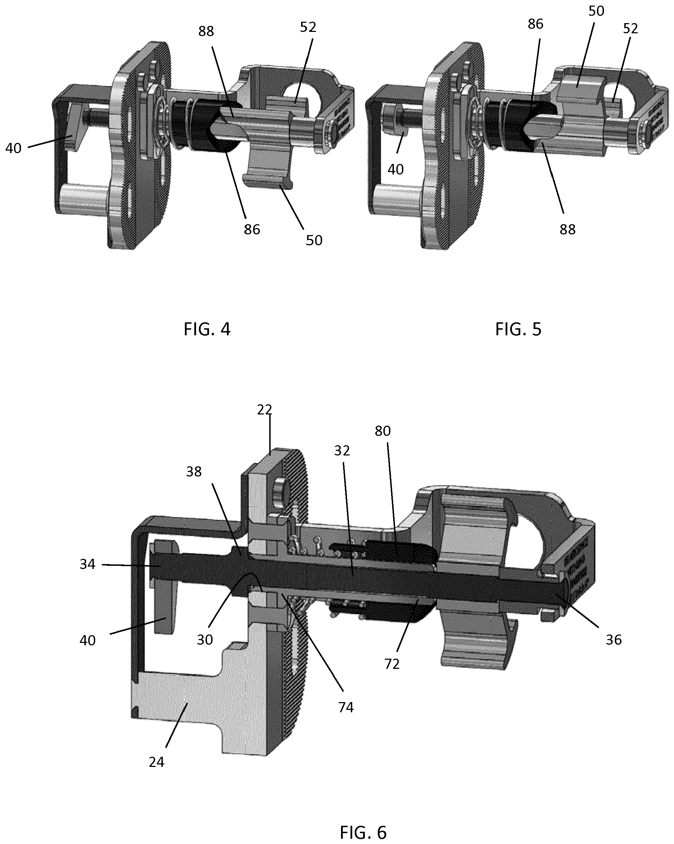

La pale peut être entraînée en rotation dans le sens horaire ou dans le sens antihoraire afin de s'adapter à différents types de serrure. L'indicateur de position 46 comprend de ce fait deux bras pouvant indiquer que la pale 40 a tourné dans un sens ou dans un autre. La position des bras est détectée par le capteur de position disposé à proximité de l'indicateur de position 46. En position non verrouillée illustrée par la figure 3, le capteur ne détecte aucun des deux bras. En position verrouillée illustrée en figure 4 ou 5, correspondant chacune à un des sens de rotation possible de la pale, le capteur détecte un bras 50 ou 52 selon le sens de rotation de la pale.

En variante, le moyeu peut ne comporter qu'un bras, auquel cas seule une position de verrouillage est détecté. Par ailleurs, l'indicateur de position n'est pas limité au moyen décrit. L'extrémité 36 de l'axe 32 peut ainsi comporter des marquages ou des moyens RFID pouvant être lus par un capteur spécifique autre qu'un capteur de position.

Avantageusement, la gâche 20 comporte un moyen permettant de ramener la pale en position déverrouillée de la gâche lorsque le pêne est désengagé du fil de gâche 24. La forme de la pale illustrée ne permet en effet pas d'être ramenée en position déverrouillée lorsque le crochet est désengagé du fil de gâche, puisque la surface extérieure de la branche supérieure du crochet glissera sur la pale sans l'accrocher.

Ainsi, la gâche comprend une entretoise 70, une came 80 et un ressort de compression 90 disposés sur l'axe 32, tous trois s'étendant entre la deuxième surface 28 de la ferrure et l'indicateur de position 46.

L'entretoise 70 a un corps tubulaire 72 dont le diamètre intérieur est adapté pour recevoir une portion centrale de l'axe 32 et une collerette 74 dont un diamètre est supérieur au diamètre de l'ouverture 30 de la ferrure. La collerette est pourvue d'ouvertures 76 coopérant avec des ouvertures ad-hoc sur la ferrure, afin de fixer l'entretoise sur la ferrure et d'en éviter la rotation par rapport à ladite ferrure. D'autres moyens de fixation de l'entretoise sur l'axe sont possibles, par exemple par collage. La surface extérieure du corps tubulaire 32 de l'entretoise comporte un méplat 78.

La came 80 comprend un corps tubulaire 82, dont le diamètre intérieur est adapté pour recevoir le corps tubulaire 72 de l'entretoise. Une paroi intérieure du corps tubulaire comporte un plat coopérant avec le méplat 78 de l'entretoise, afin de bloquer la rotation de la came sur l'entretoise 70. Une première extrémité 84 de la came est épaulée, de sorte à constituer une surface d'appui pour une première extrémité 92 du ressort de compression 90. La deuxième extrémité 94 du ressort de compression 90 prend appui sur la collerette 74 de l'entretoise.

La deuxième extrémité de la came comprend un profil de came 86 en forme de « V » (figures 3 à 5), coopérant avec un doigt 88 solidaire du moyeu 48 et s'étendant en direction de la ferrure 22 de sorte à être toujours en contact avec le profil de came 86 de la came 80, poussée en direction de l'indicateur de position par le ressort de compression 90, interposée entre la ferrure 22 et l'indicateur de position 46, quel que soit un angle de rotation pouvant être adopté par l'indicateur de position 46. En position déverrouillée, le doigt 88 est en appui dans le creux du profil de came en V (figure 3). Dans une position verrouillée (figures 4 et 5), le doigt 88 est appui sur un des bords du profil de came en V, entraîné par la rotation de la pale 40 dans un sens ou dans un autre. Dans l'exemple illustré, le profil de came en V est adapté à la rotation de la pale dans les deux sens de rotation. Si la pale 40 ne peut se déplacer que dans un seul sens de rotation, le profil 86 de came peut être adapté en conséquence.

### MISE EN OEUVRE

Lorsque le pêne accroche le fil de gâche 24, la branche supérieure du crochet 18 pousse la pale 40 dans une direction de rotation, ce qui entraîne la rotation de l'axe 32 et de l'indicateur 46 de position, puisque tous l'axe, la pale et l'indicateur de position sont liés en rotation. Lors de cette rotation, le doigt 88 du moyeu 48 de l'indicateur de position glisse sur le profil de came depuis la position déverrouillée où le doigt est positionné au fond de la forme en V en creux, vers un bord supérieur du V, ce qui pousse la came 80 en direction de la ferrure 22 et comprime le ressort de compression 90 entre la came et la collerette 74 de l'entretoise. Dans cette position, et selon la direction de rotation du verrouillage, le capteur de position détecte en raison de sa nouvelle position soit le bras 50 de l'indicateur de position (figure 5) soit le bras 52 (figure 4).

Tant que le pêne est engagé sur le fil de gâche 24, la pale est maintenue en position verrouillée par la branche supérieure du crochet 18 et le doigt 88 est maintenu sur un des bords du profil de came 86, ce qui a pour effet de maintenir comprimé le ressort de compression 90. Le capteur détecte toujours un bras 50, 52 et envoie, en continu ou périodiquement, le signal de verrouillage, en cabine ou vers un système de surveillance par exemple.

Lorsque le pêne se désengage du fil de gâche 24, le ressort de compression 90 pousse la came 80 dans la direction opposée à la ferrure 22, ramenant le doigt 88 dans le creux du profil de came en V. Ce faisant, l'indicateur de position 46 tourne dans le sens opposé de verrouillage et ramène la pale 40 dans la position déverrouillée dans laquelle elle est maintenue dans un état stable par l'action du ressort de compression 90. Les bras 50, 52 sont de nouveau hors de la zone de détection du capteur de position, et un signal en cabine indique que la serrure est déverrouillée. La forme en V et le ressort de compression stabilisent la pale et l'indicateur de position dans la position déverrouillée et empêche la rotation non voulue de l'ensemble.

Dans le cas où l'indicateur de position 46 est un marquage comme un code-barres ou une puce électronique, le doigt 88 est un élément indépendant de l'indicateur de position 46. Il peut être réalisé sous la forme d'un corps cylindrique fixé sur l'axe 32, entre la came 80 et l'indicateur de position 46. Dans cette forme de réalisation, le doigt sera fixe en rotation par rapport à l'axe 32 et ne pourra pas translater sur l'axe 32, comme l'indicateur de position 46.

La gâche de l'invention dont un exemple de réalisation a été décrit en détail peut prendre d'autres formes sans se départir des principes qui ressortent de la description détaillée de la structure d'une gâche et de son fonctionnement et qui sont définis dans les revendications annexées.

En particulier l'axe 32 ne traverse pas nécessairement la ferrure 22 et peut être monté mobile en rotation entre la ferrure et un carter situé sur un même côté que le fil de gâche 24. Dans cette forme de réalisation, non illustrée, l'indicateur de position et le moyen permettant de ramener la pale en position déverrouillée de la gâche lorsque le pêne est désengagé du fil de gâche, comme la pale 40, sont alors situés du côté de la première surface 27 de la ferrure. Dans cette forme de réalisation, l'axe 32 est avantageusement un arbre creux mobile en rotation autour d'un arbre fixe repris à des extrémités sur la ferrure 22 et le carter.

Dans cet agencement la pale et l'indicateur de position peuvent être formés par un élément unique dont la structure est obtenue par un assemblage de pièces élémentaires ou réalisé de manière intégrale, le cas échéant avec l'arbre creux sur lequel ladite pale et ledit indicateur de position sont montés.

La gâche a un fonctionnement simple, sans frottement excessif, et fiable. Elle permet de détecter la position verrouillée et déverrouillée d'une serrure apposée sur une porte d'un hélicoptère ou d'un aéronef qu'il s'agisse d'une porte passager ou d'une porte cargo. Elle trouve également application sur tout type de trappes ou de capots articulés tels que des trappes de train d'atterrissage ou des capots de moteur, des cas d'ouverture en vol de capots de turboréacteur ayant été recensés.

Une forme de réalisation avec un axe traversant la ferrure, telle que la forme de réalisation décrite de manière détaillée et illustrée sur les figures, est adaptée lorsque qu'il est souhaité intégrer la partie indicateur de position dans la structure du cadre de l'ouverture fermée par le panneau, par exemple pour protéger cette partie indicateur de position.

Une forme de réalisation avec un axe ne traversant pas la ferrure présente l'avantage d'une interférence minimale avec la structure du cadre de l'ouverture par un montage possible en applique, par exemple pour remplacer une gâche conventionnelle par une gâche de l'invention dans le cadre d'une opération d'amélioration d'un aéronef existant.

Bien évidemment, cette gâche peut être utilisée pour toutes sortes de structure comportant des portes ou panneaux pourvu de verrous dont le bon verrouillage doit être vérifié de manière simple et fiable, sans restriction à des structures d'aéronefs.

Dans une forme de réalisation dans laquelle il est mis en œuvre des capteurs pouvant acquérir un identifiant porté par l'indicateur de position, par exemple un code barre unique ou un code porté par un composant RFID, un système de surveillance du verrouillage des verrous d'une ou de plusieurs portes ou trappes sera en mesure d'indiquer non seulement si un verrou n'est pas correctement verrouillé, mais également d'indiquer à un opérateur quel verrou de quelle porte ou trappe présente un défaut de verrouillage, que ce défaut se produise lors de la fermeture ou qu'il apparaisse ultérieurement, en particulier en vol dans le cas d'un aéronef.

## Revendications

1. Gâche (20) pour coopérer avec un pêne (16) d'une serrure (10), la gâche comprenant une ferrure (22) destinée à être fixée à une structure, et un fil de gâche (24) solidaire de la ferrure, le fil de gâche s'étendant depuis une première surface (27) de la ferrure, et comprenant en outre :
- un axe (32) monté solidaire de la ferrure et libre en rotation par rapport à ladite ferrure de sorte à s'étendre dans une direction longitudinale (X) ;
- une pale (40) montée fixe en rotation sur l'axe (32) d'un premier côté de la ferrure à proximité du fil de gâche, et disposée de manière à pouvoir être entraînée en rotation par le pêne lorsque celui-ci accroche ou se décroche du fil de gâche ;
- un indicateur (46) de position angulaire monté fixe en rotation sur l'axe (32), et apte à indiquer la position angulaire de la pale ;
- un moyen pour ramener la pale dans une position stable déverrouillée et l'indicateur (46) dans une position ouverte lorsque le pêne est désengagé du fil de gâche (24) et en l'absence d'effort sur la pale ;
**caractérisée en ce que** ledit moyen comporte un ressort de compression (90) et une came (80) disposés entre la ferrure et l'indicateur (46), la came étant fixe en rotation et libre en translation dans la direction longitudinale, la came étant agencée pour rappeler et maintenir l'axe (32) dans la position ouverte dudit indicateur en l'absence d'effort sur la pale.

2. Gâche (20) selon la revendication 1, dans laquelle la came (80) comprend un profil de came (86) en forme de V en creux, la gâche comprenant de plus un doigt (88) fixe en rotation par rapport à l'axe (32), ledit doigt étant apte à glisser sur le profil de came en V, sous l'effet d'une rotation de la pale (40) et sous l'effet élastique du ressort (90) maintenant la came au contact dudit doigt.

3. Gâche (20) selon l'une des revendications précédentes, dans laquelle l'indicateur (46) de position angulaire comprend un moyeu (48) monté fixe en rotation sur l'axe (32).

4. Gâche (20) selon la revendication 3, dans laquelle l'indicateur (46) de position angulaire comporte au moins un bras (50, 52) s'étendant radialement vers l'extérieur du moyeu (48).

5. Gâche (20) selon l'une des revendications 3 ou 4, prise en combinaison avec la revendication 2, dans laquelle le doigt (88) apte à glisser sur le profil de came (86) est solidaire du moyeu (48) de l'indicateur de position (46).

6. Gâche (20) selon les revendications 3 ou 4, dans laquelle l'axe (54) comprend un méplat (42 ; 58) pourvus à chaque extrémité (34 ; 36), la pale (40) et le moyeu (48) comprenant chacun un plat pourvu sur une surface intérieure d'une ouverture de ladite pale et d'une ouverture dudit moyeu, les plats étant aptes à coopérer avec les méplats de l'axe pour bloquer la rotation de la pale et du moyeu sur l'axe lorsque ledit axe est engagé dans lesdites ouvertures.

7. Gâche (20) selon la revendication 1, dans laquelle la came et le ressort sont libres de coulisser sur une entretoise (70), ladite entretoise étant fixe par rapport à la ferrure et recevant une portion de l'axe (32) dans un trou axial de ladite entretoise.

8. Gâche (20) selon la revendication 7, dans laquelle l'entretoise (70) comprend un méplat (76) sur une surface extérieure, et la came (90) comprend un plat sur une surface intérieure, le plat de la came étant apte à coopérer avec le méplat de l'entretoise pour bloquer la rotation de la came sur l'entretoise.

9. Gâche (20) selon l'une des revendications précédentes, comportant un carter dont une ouverture est disposée en vis-à-vis de l'indicateur de position (46) pour permettre à un capteur de détecter une indication de position.

10. Gâche (20) selon l'une des revendications précédentes, dans laquelle l'axe (32), la pale (40) et l'indicateur (46) de position angulaire sont agencés sur un côté de la ferrure (22) du côté de la première surface (27) de ladite ferrure de laquelle première surface s'étend le fil de gâche (24).

11. Gâche (20) selon l'une des revendications 1 à 9, dans laquelle :
- l'axe (32) traverse la ferrure (22) de sorte à s'étendre de part et d'autre de ladite ferrure ;
- la pale (40) est montée fixe en rotation à une première extrémité (34) de l'axe (32) ;
- l'indicateur (46) de position angulaire est monté fixe en rotation à une deuxième extrémité (36) de l'axe (32), opposée à la première extrémité (34).

12. Gâche (20) selon la revendication 11, dans laquelle le ressort de compression (90) et la came (80) sont disposés entre une deuxième surface (28) de la ferrure (22), opposée à la première surface (27), et l'indicateur (46) de position angulaire.

13. Gâche (20) selon l'une des revendications 11 ou 12, prise en combinaison avec la revendication 3, dans laquelle le moyeu (48) est monté fixe en rotation à proximité de la deuxième extrémité (36) sur l'axe (32).

14. Gâche (20) selon l'une des revendications 11 à 13, comportant un carter (60) fixé à la ferrure (22), ledit carter comprenant une première ouverture (64) sur un bras (62) disposé en vis-à-vis de la deuxième surface (28) de la ferrure pour recevoir la deuxième extrémité (36) de l'axe (32).

15. Gâche (20) selon la revendication 14, dans laquelle le carter (60) comprend une deuxième ouverture (68) sur un bras (62) disposé en vis-à-vis de l'indicateur de position (46) pour permettre à un capteur de détecter une indication de position.

16. Aéronef comprenant au moins un battant mobile équipé d'au moins une serrure (10) comprenant un pêne (16) mobile en rotation, **caractérisé en ce qu'**au moins une structure de l'aéronef est équipée d'une gâche (20) selon l'une des revendications précédentes dont le fil de gâche (24) coopère avec le pêne de l'au moins une serrure pour maintenir le battant mobile en position verrouillée sur la structure.

17. Aéronef suivant la revendication 16, dans lequel le battant mobile est une porte, ou une trappe, ou un capot moteur.

## Patentansprüche

1. Schließblech (20) zum Zusammenwirken mit einem Riegel (16) eines Schlosses (10), wobei das Schließblech einen Beschlag (22) umfasst, der dazu bestimmt ist, an einer Struktur befestigt zu werden, und einen fest mit dem Beschlag verbundenen Schließblechdraht (24), wobei sich der Schließblechdraht von einer ersten Fläche (27) des Beschlags erstreckt, und weiter umfassend:
- eine Achse (32), die fest mit dem Beschlag verbunden und in Bezug auf den Beschlag frei drehend derart angebracht ist, dass sie sich in einer Längsrichtung (X) erstreckt;
- ein Blatt (40), das auf einer ersten Seite des Beschlags in der Nähe des Schließblechdrahts drehfest auf der Achse (32) angebracht und so angeordnet ist, dass es vom Riegel drehend angetrieben werden kann, wenn sich dieser am Schließblechdraht einhakt oder von demselben aushakt;
- einen Winkelstellungsanzeiger (46), der drehfest auf der Achse (32) angebracht und in der Lage ist, die Winkelstellung des Blatts anzuzeigen;
- ein Mittel, um das Blatt in eine stabile entriegelte Stellung und den Anzeiger (46) in eine offene Stellung zurückzubringen, wenn der Riegel vom Schließblechdraht (24) ausgerückt ist und keine Kraft am Blatt anliegt;
**dadurch gekennzeichnet, dass** das Mittel eine Druckfeder (90) und eine Nocke (80) umfasst, die zwischen dem Beschlag und dem Anzeiger (46) angeordnet sind, wobei die Nocke drehfest und in der Längsrichtung frei translatorisch ist, wobei die Nocke dafür eingerichtet ist, die Achse (32) in die offene Stellung des Anzeigers zurückzubringen und in derselben zu halten, wenn keine Kraft am Blatt anliegt.

2. Schließblech (20) nach Anspruch 1, wobei die Nocke (80) ein Nockenprofil (86) in Form eines hohlen V umfasst, wobei das Schließblech ferner einen in Bezug auf die Achse (32) drehfesten Finger (88) umfasst, wobei der Finger in der Lage ist, unter der Wirkung einer Drehung des Blatts (40) und unter der elastischen Wirkung der Feder (90), die die Nocke mit dem Finger in Kontakt hält, auf dem V-förmigen Nockenprofil zu gleiten.

3. Schließblech (20) nach einem der vorstehenden Ansprüche, wobei der Winkelstellungsanzeiger (46) eine drehfest auf der Achse (32) angebrachte Nabe (48) umfasst.

4. Schließblech (20) nach Anspruch 3, wobei der Winkelstellungsanzeiger (46) mindestens einen Arm (50, 52) umfasst, der sich radial zur Außenseite der Nabe (48) hin erstreckt.

5. Schließblech (20) nach einem der Ansprüche 3 oder 4 in Kombination mit Anspruch 2, wobei der Finger (88), der in der Lage ist, auf dem Nockenprofil (86) zu gleiten, fest mit der Nabe (48) des Stellungsanzeigers (46) verbunden ist.

6. Schließblech (20) nach den Ansprüchen 3 oder 4, wobei die Achse (32) eine Abflachung (42; 58) umfasst, die an jedem Ende (34; 36) vorgesehen ist, wobei das Blatt (40) und die Nabe (48) je eine Flachstelle umfassen, die an einer Innenfläche einer Öffnung des Blatts und einer Öffnung der Nabe vorgesehen ist, wobei die Flachstellen in der Lage sind, mit den Abflachungen der Achse zusammenzuwirken, um die Drehung des Blatts und der Nabe auf der Achse zu sperren, wenn die Achse in den Öffnungen eingreift.

7. Schließblech (20) nach Anspruch 1, wobei sich die Nocke und die Feder frei auf einer Strebe (70) verschieben können, wobei die Strebe in Bezug auf den Beschlag fest ist und in einer axialen Bohrung der Strebe einen Abschnitt der Achse (32) aufnimmt.

8. Schließblech (20) nach Anspruch 7, wobei die Strebe (70) an einer Außenfläche eine Abflachung (76) umfasst, und die Nocke (80) an einer Innenfläche eine Flachstelle umfasst, wobei die Flachstelle der Nocke in der Lage ist, mit der Abflachung der Strebe zusammenzuwirken, um die Drehung der Nocke auf der Strebe zu sperren.

9. Schließblech (20) nach einem der vorstehenden Ansprüche, das ein Gehäuse umfasst, von dem eine Öffnung dem Stellungsanzeiger (46) gegenüberliegend angeordnet ist, um einem Sensor zu ermöglichen, eine Stellungsanzeige zu erfassen.

10. Schließblech (20) nach einem der vorstehenden Ansprüche, wobei die Achse (32), das Blatt (40) und der Winkelstellungsanzeiger (46) auf einer Seite des Beschlags (22) auf der Seite der ersten Fläche (27) des Beschlags eingerichtet sind, von welcher ersten Fläche sich der Schließblechdraht (24) erstreckt.

11. Schließblech (20) nach einem der Ansprüche 1 bis 9, wobei:
- die Achse (32) derart durch den Beschlag (22) verläuft, dass sie sich auf beiden Seiten des Beschlags erstreckt;
- das Blatt (40) drehfest an einem ersten Ende (34) der Achse (32) angebracht ist;
- der Winkelstellungsanzeiger (46) drehfest an einem zweiten Ende (36) der Achse (32) angebracht ist, das dem ersten Ende (34) entgegengesetzt liegt.

12. Schließblech (20) nach Anspruch 11, wobei die Druckfeder (90) und die Nocke (80) zwischen einer zweiten Fläche (28) des Beschlags (22), die der ersten Fläche (27) entgegengesetzt liegt, und dem Winkelstellungsanzeiger (46) angeordnet sind.

13. Schließblech (20) nach einem der Ansprüche 11 oder 12 in Kombination mit Anspruch 3, wobei die Nabe (48) drehfest in der Nähe des zweiten Endes (36) auf der Achse (32) angebracht ist.

14. Schließblech (20) nach einem der Ansprüche 11 bis 13, das ein Gehäuse (60) umfasst, das am Beschlag (22) befestigt ist, wobei das Gehäuse an einem Arm (62), der der zweiten Fläche (28) des Beschlags gegenüberliegend angeordnet ist, eine erste Öffnung (64) umfasst, um das zweite Ende (36) der Achse (32) aufzunehmen.

15. Schließblech (20) nach Anspruch 14, wobei das Gehäuse (60) an einem Arm (62), der dem Stellungsanzeiger (46) gegenüberliegend angeordnet ist, eine zweite Öffnung (68) umfasst, um einem Sensor zu ermöglichen, eine Stellungsanzeige zu erfassen.

16. Flugzeug, das mindestens einen beweglichen Flügel umfasst, der mit mindestens einem Schloss (10) ausgestattet ist, das einen drehbeweglichen Riegel (16) umfasst, **dadurch gekennzeichnet, dass** mindestens eine Struktur des Flugzeugs mit einem Schließblech (20) nach einem der vorstehenden Ansprüche ausgestattet ist, dessen Schließblechdraht (24) mit dem Riegel des mindestens einen Schlosses zusammenwirkt, um den beweglichen Flügel an der Struktur in verriegelter Stellung zu halten.

17. Flugzeug nach Anspruch 16, wobei der bewegliche Flügel eine Tür oder eine Klappe oder eine Motorhaube ist.

## Claims

1. A striker (20) for cooperating with a bolt (16) of a latch (10), the striker comprising a fitting (22) to be fixed to a structure, and a striker wire (24) integral with the fitting, the striker wire extending from a first surface (27) of the fitting, and further comprising:
- an axis (32) mounted integral with the fitting and rotationally free relative to said fitting so as to extend in a longitudinal direction (X);
- a blade (40) mounted rotationally fixed on the axis (32) on a first side of the fitting in the proximity of the striker wire, and disposed so that it can be rotated by the bolt when the latter hooks or unhooks from the striker wire;
- an angular position indicator (46) mounted rotationally fixed on the axis (32), and capable of indicating the angular position of the blade;
- a means for bringing back the blade to an unlocked stable position and the indicator (46) to an open position when the bolt is disengaged from the striker wire (24) and in the absence of force on the blade;
**characterised in that** said means includes a compression spring (90) and a cam (80) disposed between the fitting and the indicator (46), the cam being rotationally fixed and free in translation in the longitudinal direction, the cam being arranged to return and maintain the axis (32) in the open position of said indicator in the absence of force on the blade.

2. The striker (20) according to claim 1, wherein the cam (80) comprises a recessed V-shaped cam profile (86), the striker further comprising a finger (88) rotationally fixed relative to the axis (32), said finger being capable of sliding on the V-cam profile, under the effect of a rotation of the blade (40) and under the elastic effect of the spring (90) maintaining the cam in contact with said finger.

3. The striker (20) according to one of the preceding claims, wherein the angular position indicator (46) comprises a hub (48) mounted rotationally fixed on the axis (32).

4. The striker (20) according to claim 3, wherein the angular position indicator (46) includes at least one arm (50, 52) extending radially outwardly of the hub (48).

5. The striker (20) according to one of claims 3 or 4, as combined with claim 2, wherein the finger (88) capable of sliding on the cam profile (86) is integral with the hub (48) of the position indicator (46).

6. The striker (20) according to claims 3 or 4, wherein the axis (32) comprises a flat section (42; 58) provided at each end (34; 36), the blade (40) and the hub (48) each comprising a plate provided on an inner surface with an opening of said blade and an opening of said hub, the plates being capable of cooperating with the flat sections of the axis to block the rotation of the blade and the hub on the axis when said axis is engaged in said openings.

7. The striker (20) according to claim 1, wherein the cam and the spring are free to slide on a spacer (70), said spacer being fixed relative to the fitting and receiving a portion of the axis (32) in an axial hole of said spacer.

8. The striker (20) according to claim 7, wherein the spacer (70) comprises a flat section (76) on an outer surface, and the cam (80) comprises a plate on an inner surface, the plate of the cam being capable of cooperating with the flat section of the spacer to block the rotation of the cam on the spacer.

9. The striker (20) according to one of the preceding claims, including a casing having an opening disposed facing the position indicator (46) to allow a sensor to detect a position indication.

10. The striker (20) according to one of the preceding claims, wherein the axis (32), the blade (40) and the angular position indicator (46) are arranged on one side of the fitting (22) on the side of the first surface (27) of said fitting from a first surface of which extends the striker wire (24).

11. The striker (20) according to one of claims 1 to 9, wherein:
- the axis (32) passes through the fitting (22) so as to extend on either side of said fitting;
- the blade (40) is mounted rotationally fixed at a first end (34) of the axis (32);
- the angular position indicator (46) is mounted rotationally fixed at a second end (36) of the axis (32), opposite to the first end (34).

12. The striker (20) according to claim 11, wherein the compression spring (90) and the cam (80) are disposed between a second surface (28) of the fitting (22), opposite to the first surface (27), and the angular position indicator (46).

13. The striker (20) according to one of claims 11 or 12, as combined with claim 3, wherein the hub (48) is mounted rotationally fixed in the proximity of the second end (36) on the axis (32).

14. The striker (20) according to one of claims 11 to 13, including a casing (60) fixed on the fitting (22), said casing comprising a first opening (64) on an arm (62) disposed facing the second surface (28) of the fitting to receive the second end (36) of the axis (32).

15. The striker (20) according to claim 14, wherein the casing (60) comprises a second opening (68) on an arm (62) disposed facing the position indicator (46) to allow a sensor to detect a position indication.

16. An aircraft comprising at least one movable wing equipped with at least one latch (10) comprising a bolt (16) movable rotationally, **characterised in that** at least one structure of the aircraft is equipped with a striker (20) according to one of the preceding claims whose striker wire (24) cooperates with the bolt of the at least one latch to maintain the movable wing in a locked position on the structure.

17. The aircraft according to claim 16, wherein the movable wing is a door, or a flap, or an engine cowl.
